(19) Europäisches Patentamt
European Patent Office
Office européen des brevets

(11) **EP 1 786 214 A2**

(12) **EUROPEAN PATENT APPLICATION**

(43) Date of publication:
**16.05.2007 Bulletin 2007/20**

(51) Int Cl.:
**H04N 9/68** (2006.01)

(21) Application number: **06123954.7**

(22) Date of filing: **13.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.11.2005 JP 2005329294**

(71) Applicant: **Pioneer Corporation**
**Tokyo 153-8654 (JP)**

(72) Inventors:
• **Minakuchi, Takeshi**
**Ohta-ku, Tokyo 143-8564 (JP)**
• **Fujimoto, Masakatsu**
**Ohta-ku, Tokyo 143-8564 (JP)**

(74) Representative: **Betten & Resch**
**Patentanwälte,**
**Theatinerstrasse 8**
**80333 München (DE)**

(54) **Display device, signal processing circuit, program, and display method**

(57) When a YUV signal is inputted to a signal processing circuit (32) from the outside, a histogram detection unit detects a histogram of a single frame of the Y signal, a correlation determination unit (35) determines a correlation between a gain and a level of an inputted Y signal on the basis of the histogram, and a YUV gain determination unit (37) determines the gain. A Y gain multiplication unit (33) and a UV gain multiplication unit (34) multiply each of the inputted Y signal, U signal, and V signal by the same gain to correct the YUV signal. A YUV/RGB conversion unit (28) converts the signal into an RGB signal, and outputs the result to a display element (23). In the display device, there is no change in color balance even when contrast correction and other nonlinear signal processing are performed.

FIG. 14

## Description

Field of the Invention

The present invention relates to a display device in which nonlinear signal processing is performed for a color image signal, to a signal processing circuit, to a program, and to a display method.

Description of the Related Art

Signal processing has been performed in the past in order to improve image contrast in plasma display devices and other display devices. Display devices include display devices in which an RGB-type image signal is inputted (hereinafter referred to as an RGB signal), and display devices in which an image signal (hereinafter referred to in general as a YUV signal) composed of a YUV signal or other luminance signal and a color-difference signal. The former is mainly used in personal computer displays and the like, and the latter is mainly used in DVD (Digital Versatile Disc) players, television receivers, and the like. The aforementioned signal processing is performed for RGB signals and YUV signals. Cases in which RGB signals and YUV signals are processed will be described hereinafter for each conventional display device.

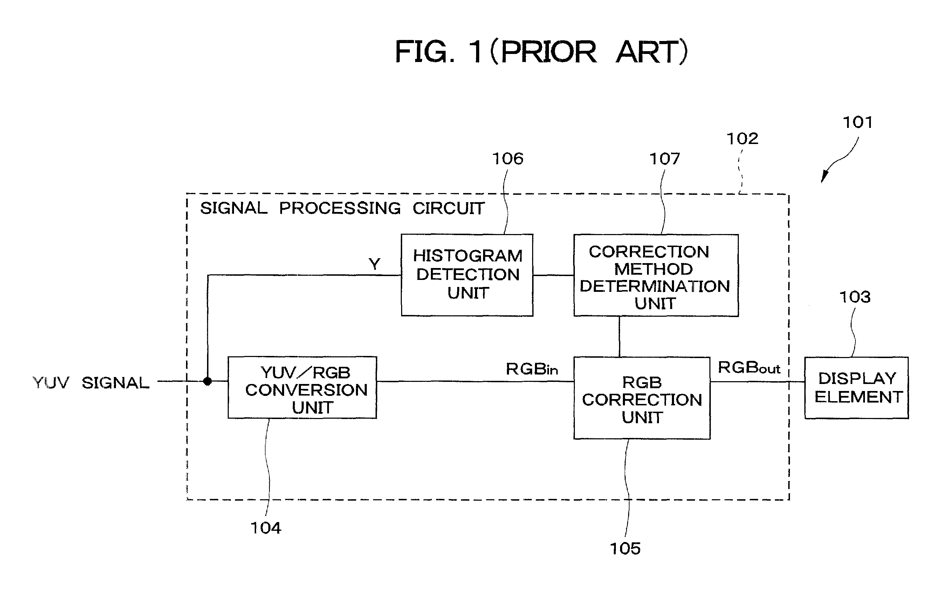

A conventional signal processing method used for an RGB-type signal will first be described. FIG. 1 is a block diagram showing a conventional display device into which a YUV signal is inputted, wherein an RGB signal is processed. As shown in FIG. 1, this conventional display device 101 is provided with a signal processing circuit 102 for processing a YUV signal that is inputted from the outside, and a display element 103 for displaying an image on the basis of the processed RGB signal outputted from the signal processing circuit 102. The display element 103 is a PDP (Plasma Display Panel), for example.

The signal processing circuit 102 is provided with a YUV/RGB converter 104 whereby a YUV signal inputted from the outside is converted to an RGB signal, and an RGB correction unit 105 for correcting the nonlinear contrast of the RGB signal outputted from the YUV/RGB converter 104 and outputting the corrected RGB signal to the display element 103.

The signal processing circuit 102 is also provided with a histogram detection unit 106 for detecting a histogram of the Y signal (luminance component) of a single frame (single screen) from the YUV signal inputted from the outside, and a correction method determination unit 107 for determining the correction method in the single frame on the basis of the detected histogram. The aforementioned RGB correction unit 105 corrects the RGB signal for each pixel that constitutes the single frame on the basis of the correction method determined by the correction method determination unit 107. This correction is performed independently for the R component, the G component, and the B component of the RGB signal.

When a YUV signal is inputted from the outside in this conventional display device 101, the histogram detection unit 106 detects the histogram of the Y signal from a single frame of the YUV signal, and the correction method determination unit 107 determines the correction method of the frame, i.e., the correlation between the level of the input signal and the level of the output signal of the RGB correction unit 105, on the basis of the histogram. This correlation is a nonlinear correlation whereby pixels that are brighter than a reference value are further brightened, and pixels that are darker than a reference value are further darkened, for example. The contrast of midtone levels can thereby be emphasized, and the contrast of the image as a whole can be improved. This correlation is provided to the RGB correction unit 105.

The YUV signal inputted from the outside is also inputted to the YUV/RGB converter 104. The YUV/RGB converter 104 converts the YUV signal to an RGB signal and outputs the result to the RGB correction unit 105. The RGB correction unit 105 corrects the RGB signal for each RGB component on the basis of the correlation provided from the correction method determination unit 107, and outputs the result to the display element 103. The display element 103 displays an image on the basis of the corrected RGB signal. The contrast of an image can be improved in this manner in the display device 101.

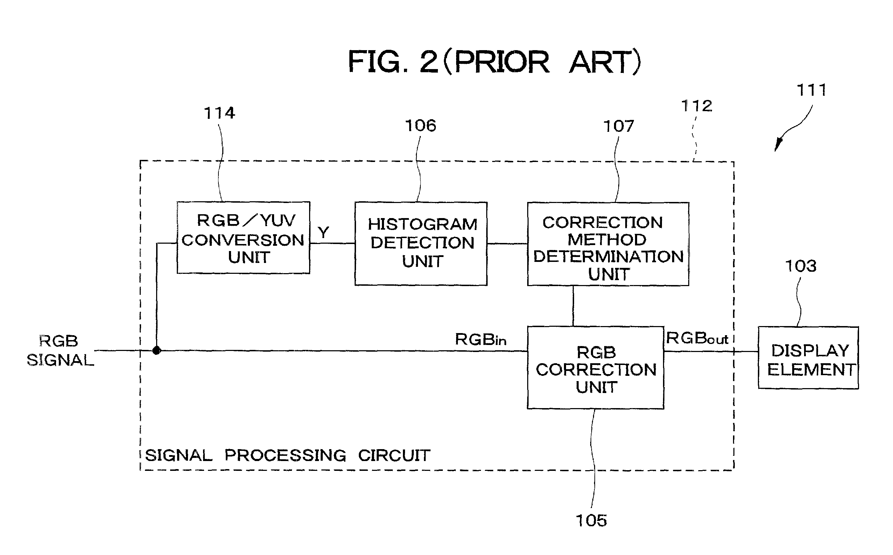

FIG. 2 is a block diagram showing a conventional display device into which an RGB signal is inputted, wherein signal is processed. As shown in FIG. 2, this conventional display device 111 differs from the display device 101 shown in FIG. 1 with respect to the structure of the signal processing circuit. Specifically, unlike the signal processing circuit 102 shown in FIG. 1, the YUV/RGB converter 104 is not provided to the signal processing circuit 112 shown in FIG. 2, and an RGB signal inputted from the outside is inputted to the RGB correction unit 105 without modification. The signal processing circuit 112 is provided with an RGB/YUV converter 114 for converting an RGB signal inputted from the outside into a YUV signal, and a Y signal from the YUV signal converted by the RGB/YUV converter 114 is inputted to the histogram detection unit 106. Other structural aspects of the display device 111 are the same as in the display device 101.

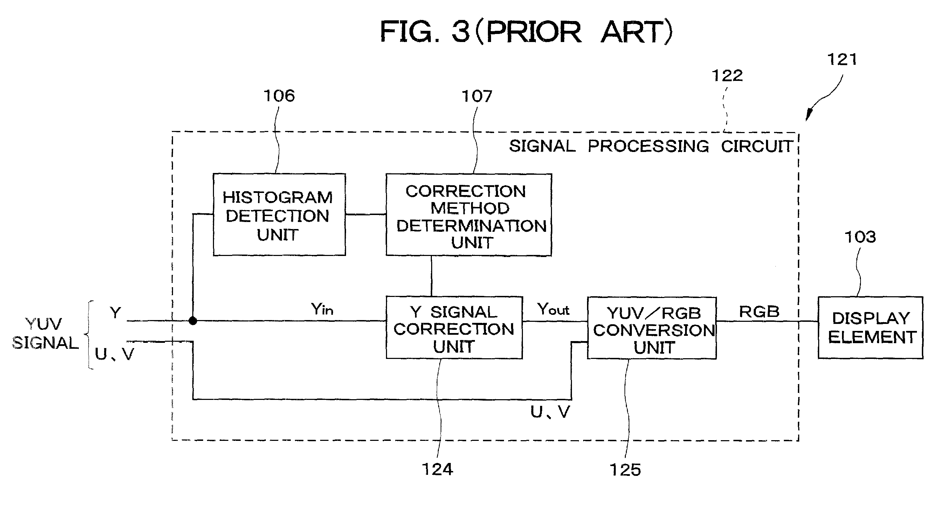

A conventional method for processing a YUV-type signal will next be described. FIG. 3 is a block diagram showing a conventional display device into which a YUV signal is inputted, wherein signal is processed. As shown in FIG. 3, this conventional display device 121 is provided with a signal processing circuit 122 for processing a YUV signal inputted from the outside, and a display element 103 for displaying an image on the basis of the processed RGB signal that is outputted from the signal processing circuit 122.

The signal processing circuit 122 is provided with a Y signal correction unit 124 for correcting the Y signal (luminance component) of the YUV signal inputted from the outside. A Y signal that is corrected by the Y signal correction unit 124, and a U signal and V signal (color difference components) of the YUV signal inputted from the outside, i.e., an uncorrected U signal and V signal, are inputted to a YUV/RGB converter 125 that is provided for converting the YUV signal composed of the Y, U, and V signals into an RGB signal and outputting the result to the display element 103.

The signal processing circuit 122 is also provided with a histogram detection unit 106 for detecting a histogram of the Y signal of a single frame from the YUV signal inputted from the outside, and a correction method determination unit 107 for determining the correction method in the single frame on the basis of the detected histogram. With the Y signal correction unit 124, the Y signal for each pixel that constitutes the single frame is corrected on the basis of the correction method determined by the correction method determination unit 107.

When a YUV signal is inputted from the outside in this conventional display device 121, the Y signal from the YUV signal is inputted to the histogram detection unit 106 and the Y signal correction unit 124. The histogram detection unit 106 then detects the histogram of the Y component from a single frame of the YUV signal and outputs the result to the correction method determination unit 107. The correction method determination unit 107 determines the correction method of the frame, i.e., the correlation between the level of the input signal and the level of the output signal of the Y signal correction unit 124, on the basis of the histogram. This correlation is provided to the Y signal correction unit 124.

The Y signal correction unit 124 corrects the inputted Y signal on the basis of the correlation provided from the correction method determination unit 107. The corrected Y signal is then inputted to a YUV/RGB converter 125. The U signal and V signal from the YUV signal inputted from the outside are inputted directly to the YUV/RGB converter 125 without being corrected. The YUV/RGB converter 125 then converts the inputted YUV signal into an RGB signal and outputs the result to the display element 103. The display element 103 displays an image on the basis of the corrected RGB signal. The contrast of the image can thereby be improved in the display device 121.

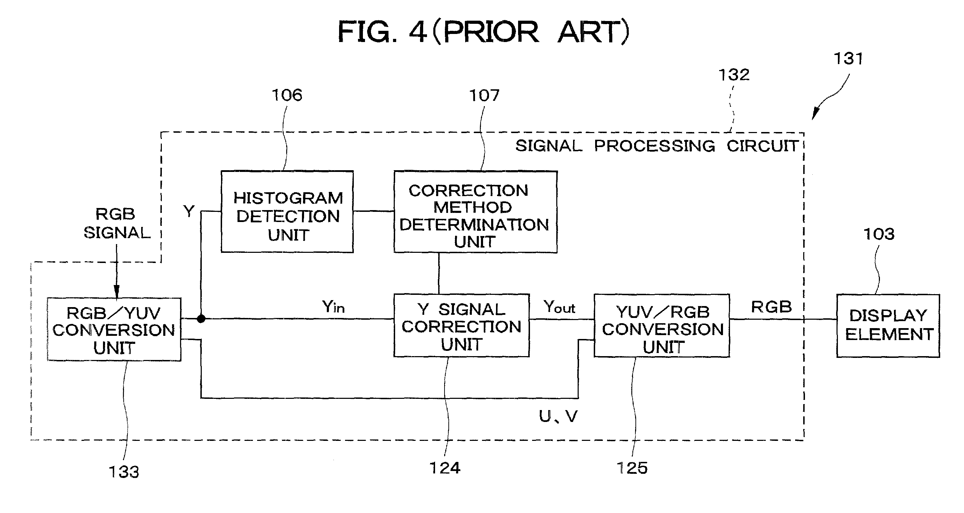

FIG. 4 is a block diagram showing a conventional display device into which an RGB signal is inputted, wherein signal is processed. As shown in FIG. 4, this conventional display device 131 differs from the display device 121 shown in FIG. 3 in that an RGB/YUV converter 133 is provided to the signal processing circuit 132. The RGB/YUV converter 133 converts an RGB signal inputted from the outside into a YUV signal, outputs the Y signal of the converted YUV signal to the histogram detection unit 106 and the Y signal correction unit 124, and outputs the U signal and V signal to the YUV/RGB converter 125. Other aspects of the structure of the display device 131 are the same as in the display device 121.

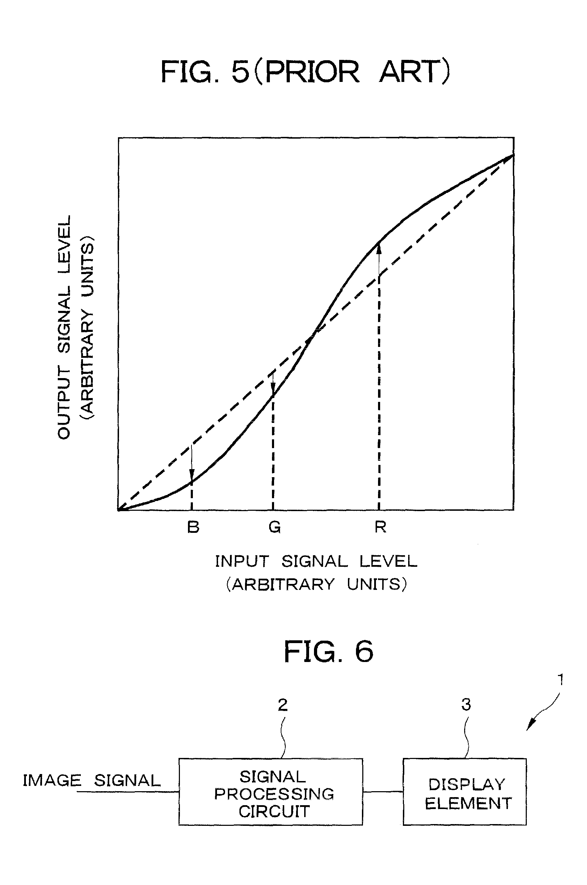

However, the conventional techniques described above have such problems as the following. The problems of methods for processing an RGB signal such as the ones shown in FIGS. 1 and 2 will first be described. FIG. 5 is a graph showing the signal correction method of the RGB correction unit 105, wherein the horizontal axis indicates the level of the input signal of the RGB correction unit 105 shown in FIGS. 1 and 2, and the vertical axis indicates the level of the output signal thereof. As shown in FIG. 5, the contrast of midtone levels is emphasized, and the contrast of the image as a whole is improved by further brightening pixels that are brighter than a reference value, and further darkening pixels that are darker than a reference value according to the signal correction method. As shown in FIG. 5, the levels of the R component, the G component, and the B component in an RGB signal are generally different from each other. Each of the components is therefore corrected to different degrees even when the correction is made based on the same correlation. For example, in FIG. 5, the R component level is higher than the reference value, and is therefore further increased. The G component level is somewhat lower than the reference value, and is therefore somewhat reduced. The B component level is significantly lower than the reference value, and is therefore significantly reduced. Therefore, in the corrected RGB signal, the saturation, hue, and other color balance characteristics are degraded with respect to the RGB signal before correction.

In methods used to process a YUV signal such as those shown in FIGS. 3 and 4, correction is performed only for the Y signal and not for the U signal and V signal, and the color balance is therefore compromised as well.

Japanese Laid-open Patent Application No. 2000-115799 therefore discloses a technique for correcting the U signal and V signal according to the amount of correction of the Y signal, i.e., the amount of correction defined by $\Delta Y = Y_{out} - Y_{in}$, wherein $Y_{in}$ is the Y signal level before correction, and $Y_{out}$ is the Y signal level after correction, in order to suppress a change in color balance that accompanies correction in a method for correcting a YUV signal.

However, the abovementioned conventional technique has the problems described below. As described in Japanese Laid-open Patent Application No. 2000-115799, even when the U signal and V signal are corrected based on the amount of correction of the Y signal, the color balance can still deteriorate as a result of the correction, and the suppression of changes in color balance is inadequate.

The abovementioned problems are cited as examples of the problems that the present invention is intended to solve.

The display device according to the present invention comprises a signal processing circuit for performing nonlinear signal processing of an inputted color image signal, wherein the signal processing circuit multiplies each component of the image signal by the same gain.

The signal processing circuit according to the present invention is a signal processing circuit for performing nonlinear signal processing of an inputted color image signal, wherein the signal processing circuit multiplies each component of the image signal by the same gain.

The program according to the present invention is a program for causing a computer to execute a signal processing procedure for performing nonlinear signal processing of an inputted color image signal, wherein the signal processing procedure comprises multiplying each component of the image signal by the same gain.

The display method according to the present invention comprises a signal processing step for performing nonlinear signal processing of an inputted color image signal, wherein the signal processing step comprises multiplying each component of the image signal by the same gain.

FIG. 1 is a block diagram showing a display device into which a YUV signal is inputted, wherein signal is processed;

FIG. 2 is a block diagram showing a display device into which an RGB signal is inputted, wherein an RGB signal is processed;

FIG. 3 is a block diagram showing a display device into which a YUV signal is inputted, wherein signal is processed;

FIG. 4 is a block diagram showing a display device into which an RGB signal is inputted, wherein signal is processed;

FIG. 5 is a graph showing the signal correction method of the RGB correction unit, wherein the horizontal axis indicates the level of the input signal of the RGB correction unit, and the vertical axis indicates the level of the output signal thereof;

FIG. 6 is a block diagram showing the display device according to a first embodiment of the present invention;

FIG. 7 is a block diagram showing the display device according to a second embodiment of the present invention;

FIG. 8 is a block diagram showing the display device according to a third embodiment of the present invention;

FIG. 9 is a block diagram showing the display device according to a fourth embodiment of the present invention;

FIG. 10 is a block diagram showing the display device according to a fifth embodiment of the present invention;

FIG. 11 is a block diagram showing the display device according to a first example of the present invention;

FIG. 12 is a graph showing the correlation between the level of the inputted Y signal and the level of the outputted Y signal, wherein the horizontal axis indicates the level $Y_{in}$ of the Y signal inputted to the Y signal level correction unit, and the vertical axis indicates the level $Y_{out}$ of the outputted Y signal;

FIG. 13 is a block diagram showing the display device according to a second example of the present invention;

FIG. 14 is a block diagram showing the display device according to a third example of the present invention;

FIG. 15 is a graph showing the correlation between the level and the gain of the Y signal, wherein the horizontal axis indicates the level of the inputted Y signal, and the vertical axis indicates the gain;

FIG. 16 is a block diagram showing the display device according to a fourth example of the present invention;

FIG. 17 is a block diagram showing the display device according to a fifth example of the present invention; and

FIG. 18 is a block diagram showing the display device according to a sixth example of the present invention.

Embodiments of the present invention will be described in detail below with reference to the attached drawings. A first embodiment of the present invention will first be described. FIG. 6 is a block diagram showing the display device of the present embodiment. As shown in FIG. 6, a color image signal is inputted to the display device 1 of the present embodiment. The display device 1 is provided with a signal processing circuit 2 for performing nonlinear signal processing of this image signal. The signal processing circuit 2 corrects the image signal by multiplying each component of the inputted image signal by the same gain. The display device 1 is furthermore provided with a display element 3 for displaying an image on the basis of the corrected image signal. The display element 3 is a PDP, for example.

The operation of the display device of the present embodiment, i.e., the display method of the present embodiment, will next be described. As shown in FIG. 6, when a color image signal is inputted to the signal processing circuit 2 of the display device 1, the signal processing circuit 2 performs nonlinear signal processing of the image signal by multiplying each component of the image signal by the same gain. The processed image signal is then outputted to the display element 3. The display element 3 displays an image on the basis of the processed image signal.

The effect of the present embodiment will next be described. In the present embodiment, since the signal processing circuit 2 multiplies each component of the image signal by the same gain, the saturation, hue, and other color balance characteristics of the image signal are not degraded by signal processing. A display having good color reproduction properties can therefore be obtained.

The signal processing circuit 2 is composed of hardware, but may also be implemented by software using a computer. In this case, the program for implementing the signal processing circuit 2 causes a computer to execute a signal processing procedure for performing nonlinear signal processing of an inputted color image signal, and the signal processing procedure multiplies each component of the image signal by the same gain.

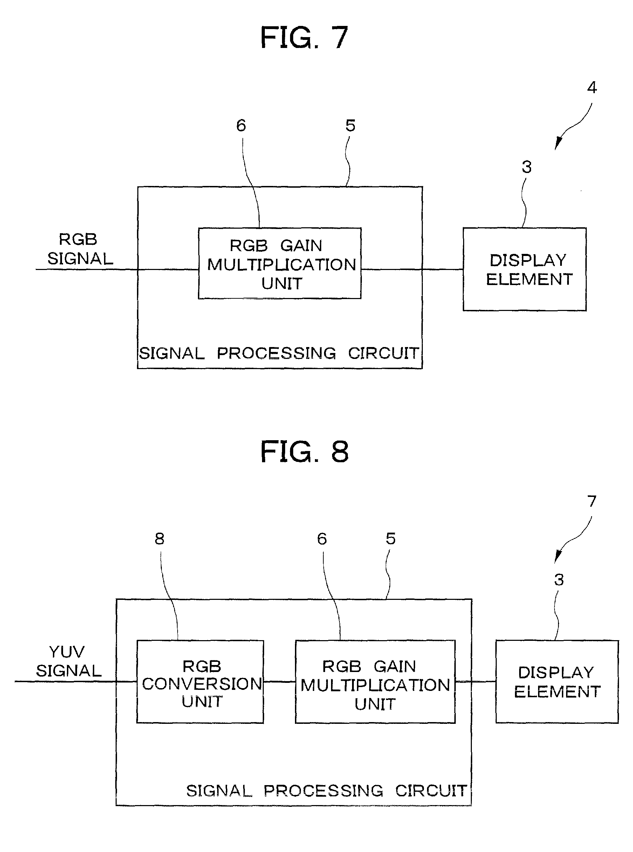

A second embodiment of the present invention will next be described. FIG. 7 is a block diagram showing the display device of the present embodiment. As shown in FIG. 7, a color image signal that is an RGB-type image signal is inputted to the display device 4 of the present embodiment. The display device 4 is provided with a signal processing circuit 5 for performing nonlinear signal processing of the image signal, and a display element 3 for displaying an image on the basis of the image signal outputted from the signal processing circuit 5. The display element 3 displays an image on the basis of an RGB-type image signal, and is a PDP, for example. The signal processing circuit 5 is provided with an RGB gain multiplication unit 6 for multiplying each of the R component, the G component, and the B component of an externally inputted RGB-type signal by the same gain.

The operation of the display device of the present embodiment, i.e., the display method of the present embodiment, will next be described. As shown in FIG. 7, when an RGB-type color image signal is inputted from the outside to the RGB gain multiplication unit 6 of the signal processing circuit 5 of the display device 4, the RGB gain multiplication unit 6 performs nonlinear correction by multiplying each of the R component, the G component, and the B component of the image signal by the same gain. This correction is performed in order to improve the contrast of the image, for example. The corrected image signal is then outputted to the display element 3. The display element 3 displays an image on the basis of this corrected RGB-type image signal.

The effect of the present embodiment will next be described. In the present embodiment, since the RGB gain multiplication unit 6 multiplies each color component of the RGB-type image signal by the same gain, the color balance of the image signal is not degraded by signal processing. A display having good color reproduction properties can therefore be obtained.

The signal processing circuit 5 is composed of hardware, but may also be implemented by software using a computer. In this case, the program for implementing the signal processing circuit 5 causes a computer to execute a signal processing procedure for performing nonlinear signal processing of an inputted RGB-type image signal, and the signal processing procedure has an RGB gain multiplication procedure for multiplying each of the R component, the G component, and the B component of the image signal by the same gain.

A third embodiment of the present invention will next be described. FIG. 8 is a block diagram showing the display device of the present embodiment. As shown in FIG. 8, the display device 7 of the present embodiment differs from aforementioned second embodiment in that a signal that includes a luminance component and a color difference component, i.e., a YUV-type image signal, is inputted, wherein the image signal that includes a luminance component and a color difference component is inputted from the outside to a signal processing circuit 5, and an RGB conversion unit 8 is provided for converting the image signal to an RGB-type signal and outputting the converted signal to an RGB gain multiplication unit 6. Other aspects of the structure and operation of the present embodiment are the same as in the aforementioned second embodiment.

The effect of the present embodiment will next be described. In the present embodiment, an image can be displayed on the basis of an image signal that includes a luminance component and a color difference component. Other effects of the present embodiment are the same as those of the aforementioned second embodiment.

The signal processing circuit 5 is composed of hardware, but may also be implemented by software using a computer. In this case, the program for implementing the signal processing circuit 5 causes a computer to execute a signal processing procedure for performing nonlinear signal processing of an inputted image signal that includes a luminance component and a color difference component, and the signal processing procedure has an RGB conversion procedure for converting the image signal to an RGB-type signal, and also has an RGB gain multiplication procedure for multiplying each of the R component, the G component, and the B component of the RGB-type image signal by the same gain.

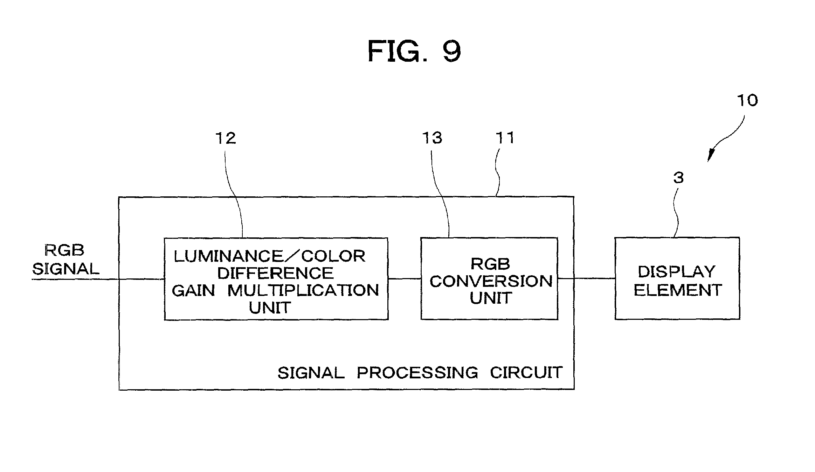

A fourth embodiment of the present invention will next be described. FIG. 9 is a block diagram showing the display device of the present embodiment. As shown in FIG. 9, a color image signal that includes a luminance component and a color difference component, i.e., a YUV-type image signal, is inputted to the display device 10 of the present embodiment. The display device 10 is also provided with a signal processing circuit 11 for performing nonlinear signal processing of the image signal, and a display element 3 for displaying an image on the basis of the image signal outputted from the signal processing circuit 11. The display element 3 displays an image on the basis of an RGB-type image signal and is a PDP, for example. The signal processing circuit 11 is provided with luminance/color difference gain multiplication unit 12 for multiplying each of the luminance component and the color difference component of an externally inputted image signal by the same gain, and an RGB conversion unit 13 for converting the signal that includes the gain-multiplied luminance component and the gain-multiplied color difference component into an RGB-type signal and outputting the signal to the display element 3.

The operation of the display device of the present embodiment, i.e., the display method of the present embodiment, will next be described. As shown in FIG. 9, when a color image signal that includes a luminance component and a color difference component is inputted from the outside to the luminance/color difference gain multiplication unit 12 of the signal processing circuit 11 of the display device 10, the luminance/color difference gain multiplication unit 12 performs nonlinear correction by multiplying each of the luminance component and the color difference component of the image signal by the same gain. When the image signal is a YUV-type signal, for example, each of the Y signal (luminance component) and the U signal and V signal (color difference components) is multiplied by the same gain. This correction is performed in order to improve the contrast of the image, for example. The corrected image signal is then outputted to the RGB conversion unit 13. With the RGB conversion unit 13, the signal that includes the luminance component and color difference component that were multiplied by the same gain is converted by the luminance/color difference gain multiplication unit 12 into an RGB-type signal, and is outputted to the display element 3. The display element 3 displays an image on the basis of this RGB-type image signal.

The effect of the present embodiment will next be described. In the present embodiment, since the luminance/color difference gain multiplication unit 12 multiplies each component of the image signal that includes a luminance component and a color difference component by the same gain, and performs signal processing, the color balance of the image signal is not degraded by signal processing. A display having good color reproduction properties can therefore be obtained.

The signal processing circuit 11 is composed of hardware, but may also be implemented by software using a computer. In this case, the program for implementing the signal processing circuit 11 causes a computer to execute a signal processing procedure for performing nonlinear signal processing of an inputted image signal that includes a luminance component and a color difference component, and the signal processing procedure has a luminance component/color difference component gain multiplication procedure for multiplying each of the luminance component and the color difference component by the same gain.

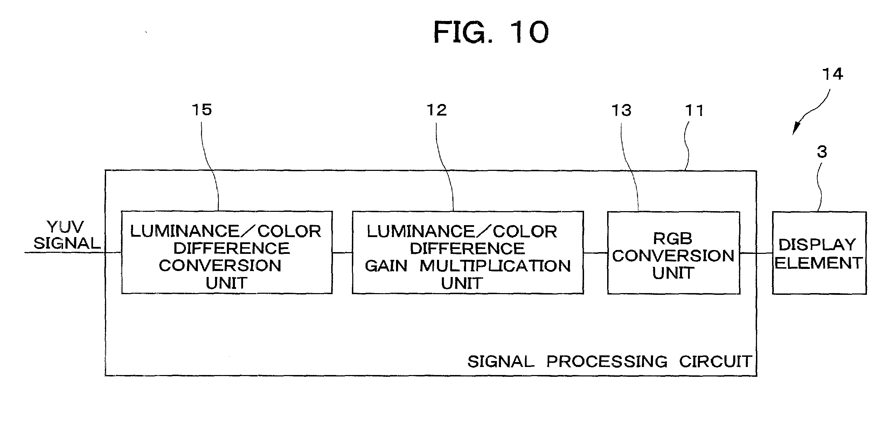

A fifth embodiment of the present invention will next be described. FIG. 10 is a block diagram showing the display device of the present embodiment. As shown in FIG. 10, the display device 14 of the present embodiment differs from aforementioned fourth embodiment in that an RGB-type image signal is inputted as the input signal, an RGB-type image signal is inputted to a signal processing circuit 11 from the outside, and a luminance/color difference conversion unit 15 is provided for converting the image signal into an image signal that includes a luminance component and a color difference component, and outputting the converted image signal to a luminance/color difference gain multiplication unit 12. Other aspects of the structure and operation of the present embodiment are the same as in the aforementioned fourth embodiment.

The effect of the present embodiment will next be described. In the present embodiment, an image can be displayed on the basis of an RGB-type image signal. Other effects of the present embodiment are the same as those of the aforementioned fourth embodiment.

The signal processing circuit 11 is composed of hardware, but may also be implemented by software using a computer. In this case, the program for implementing the signal processing circuit 11 causes a computer to execute a signal processing procedure for performing nonlinear signal processing of an inputted RGB-type image signal, and the signal processing procedure has a luminance/color difference conversion procedure for converting the RGB-type image signal into a signal that includes a luminance component and a color difference component, and also has a luminance/color difference gain multiplication procedure for multiplying each of the luminance component and the color difference component by the same gain.

In the aforementioned first through fifth embodiments, the signal processing circuit may be provided with a gain determination unit for determining a gain on the basis of the luminance component of the image signal. The gain determination unit may be provided with a correlation determination unit for determining a correlation between the luminance component and the gain on the basis of a histogram of the luminance component of a single frame of the image signal, and a gain calculation unit for determining the gain on the basis of the correlation and the luminance component of the image signal of each pixel.

This structure may be composed of hardware, or may be implemented by software using a computer. In this case, in the program according to the aforementioned embodiments, the signal processing procedure may have a gain determination procedure for determining the gain on the basis of the luminance component of the image signal. The gain determination procedure may have a histogram detection procedure for detecting a histogram of the luminance component of a single frame of the image signal, a correlation determination procedure for determining a, correlation between the luminance component and the gain on the basis of the histogram, a luminance component level detection procedure for detecting the level of the luminance component of each pixel from the luminance component, and a gain calculation procedure for determining the gain on the basis of the correlation and the luminance component level.

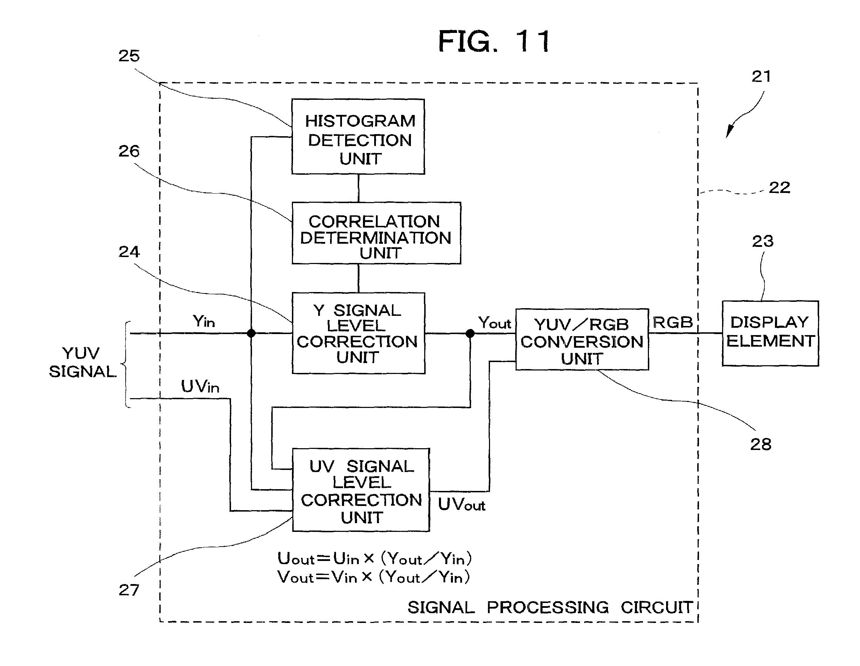

Examples of the present invention will next be described. A first example of the present invention will first be described. FIG. 11 is a block diagram showing the display device of the example. As shown in FIG. 11, a color digital image signal that includes a luminance component and a color difference component, i.e., a YUV signal, is inputted to the display device 21 of the example, and an image is displayed on the basis of the image signal. The display device 21 is provided with a signal processing circuit 22 and a display element 23. The signal processing circuit 22 performs nonlinear signal processing of the inputted image signal in order to improve the contrast of the image, and outputs the signal as an RGB signal to the display element 23. The display element 23 displays an image on the basis of the RGB signal, and is a PDP, for example.

A Y signal from the YUV signal inputted from the outside is inputted to the signal processing circuit 22, and a Y signal level correction unit 24 is provided for correcting the level of the Y signal. The signal processing circuit 22 is also provided with a histogram detection unit 25 for detecting a histogram of a single frame (or a single field) of the Y signal, and the Y signal of the YUV signal is inputted to the histogram detection unit 25. The circuit further has a correlation determination unit 26 for determining a correlation between the level of the Y signal inputted to the Y signal level correction unit 24 and the level of the Y signal outputted from the Y signal level correction unit 24, and providing the correlation to the Y signal level correction unit 24. The correlation determination unit 26 is a CPU (Central Processing Unit), for example. The Y signal level correction unit 24 corrects the luminance component level of each pixel on the basis of the correlation.

Furthermore, the signal processing circuit 22 is provided with a UV signal level correction unit 27 for receiving the entire YUV signal inputted from the outside, i.e., the Y signal, the U signal, and the V signal, and also receiving the corrected Y signal from the Y signal level correction unit 24. The UV signal level correction unit 27 multiplies the rate of change of the Y signal, i.e., the ratio of the Y signal level after correction with respect to the Y signal level before correction, by the U signal and the V signal to correct the U signal and the V signal. The operation of the UV signal level correction unit 27 can be indicated by Eqs. 1 and 2 below, wherein $Y_{in}$ is the level of the Y signal before correction, $Y_{out}$ is the level of the Y signal after correction, $U_{in}$ is the level of the U signal before correction, $U_{out}$ is the level of the U signal after correction, $V_{in}$ is the level of the V signal before correction, and $V_{out}$ is the level of the V signal after correction.

[Eq. 1]

$$U_{out} = U_{in} \times \frac{Y_{out}}{Y_{in}}$$

[Eq. 2]

$$V_{out} = V_{in} \times \frac{Y_{out}}{Y_{in}}$$

The signal processing circuit 22 is furthermore provided with a YUV/RGB conversion unit 28 for receiving the corrected Y signal from the Y signal level correction unit 24, receiving the corrected U signal and V signal from the UV signal level correction unit 27, and converting the corrected YUV signal composed of the Y signal, U signal, and V signal into an RGB signal. The YUV/RGB conversion unit 28 outputs the converted RGB signal to the display element 23.

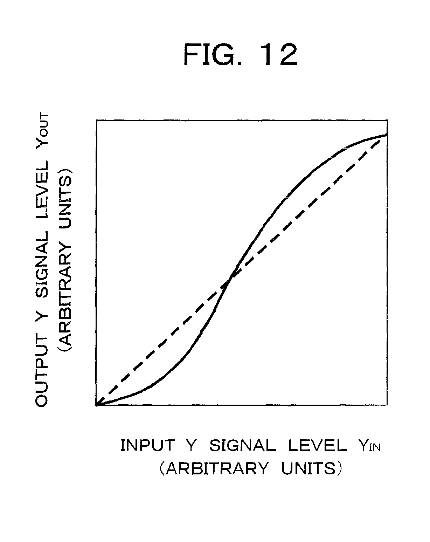

The operation of the display device of the example thus configured will next be described. Specifically, the display method of the example will be described. FIG. 12 is a graph showing the correlation between the level of the inputted Y signal and the level of the outputted Y signal, wherein the horizontal axis indicates the level $Y_{in}$ of the Y signal inputted to the Y signal level correction unit 24, and the vertical axis indicates the level $Y_{out}$ of the outputted Y signal. The dashed line in FIG. 12 indicates a case in which correction is not performed, e.g., a case in which $Y_{out} = Y_{in}$.

As shown in FIG. 11, when a YUV signal is inputted to the signal processing circuit 22 of the display device 21 from the outside, the Y signal of the YUV signal is inputted to each of the Y signal level correction unit 24, the histogram detection unit 25, and the UV signal level correction unit 27; and the U signal and V signal are inputted only to the UV signal level correction unit 27.

The histogram detection unit 25 detects a histogram of a single frame of the Y signal, and outputs the detected result to the correlation determination unit 26. With the correlation determination unit 26, a correlation between the level of the Y signal inputted to the Y signal level correction unit 24 and the level of the Y signal outputted from the Y signal level correction unit 24 is determined on the basis of the histogram, and the correlation is provided to the Y signal level correction unit 24. At this time, several types of functions or tables are stored in the correlation determination unit 26, and the correlation may be determined by selecting the optimum function or table according to the histogram, or the correlation may be determined by performing a prescribed computation based on the histogram and generating the optimum function or table.

The correlation is the type of relationship shown in FIG. 12, for example. Specifically, when the level of the inputted Y signal is higher than a reference value, the Y signal is corrected so as to have a higher value. When the level of the inputted Y signal is lower than a reference value, the Y signal is corrected so as to have a lower value. The contrast of pixels having an intermediate tonal level can thereby be emphasized, and the contrast of the image as a whole can be improved.

The Y signal level correction unit 24 corrects the level of the inputted Y signal and outputs the signal to the UV signal level correction unit 27 and YUV/RGB conversion unit 28 on the basis of the correlation provided from the correlation determination unit 26. The UV signal level correction unit 27 multiplies each of the U signal and the V signal by the rate

of change ($Y_{out}/Y_{in}$) of the Y signal to correct the U signal and V signal, as shown in Eqs. 1 and 2 above. The corrected U signal and V signal are then outputted to the YUV/RGB conversion unit 28.

With the YUV/RGB conversion unit 28, the corrected YUV signal composed of the corrected Y signal inputted from the Y signal level correction unit 24 is converted to an RGB signal, as are the corrected U signal and V signal inputted from the UV signal level correction unit 27. The converted RGB signal is then outputted to the display element 23. The display element 23 displays an image on the basis of this RGB signal.

The effect of the example will next be described. In the example, the inputted U signal and Y signal are multiplied by the ratio ($Y_{out}/Y_{in}$) of the corrected Y signal level with respect to the Y signal level before correction. Accordingly, the gain by which the U signal and Y signal are multiplied is ($Y_{out}/Y_{in}$). The gain of the Y signal can also be indicated as the ratio ($Y_{out}/Y_{in}$) . As a result, the Y signal, U signal, and V signal of the inputted YUV signal are multiplied by the same gain, i.e., the ratio ($Y_{out}/Y_{in}$). The color balance of the image signal is therefore not degraded by correction.

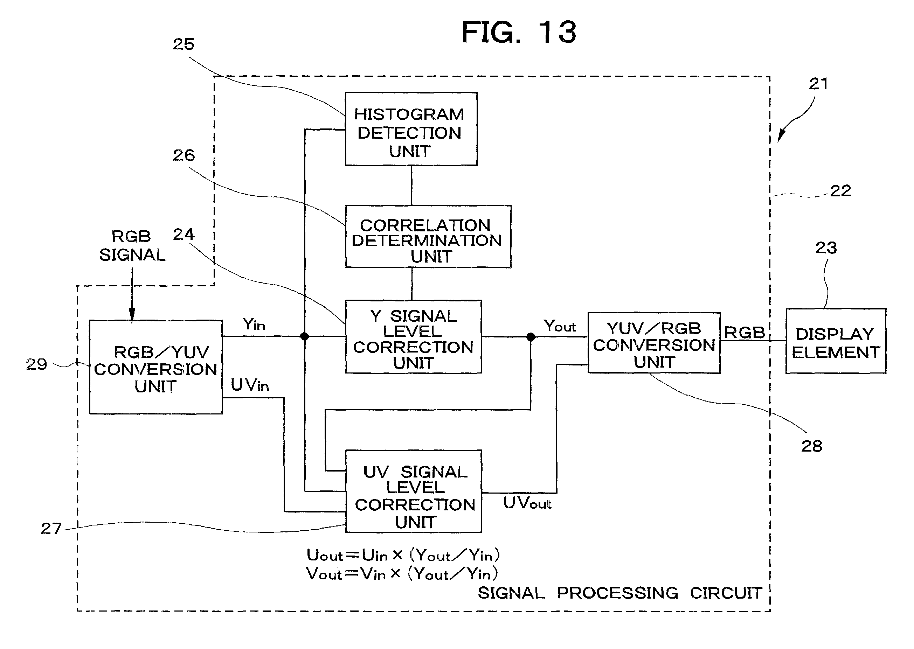

A second example of the present invention will next be described. FIG. 13 is a block diagram showing the display device of the example. As shown in FIG. 13, an RGB signal is inputted instead of a YUV signal as the image signal that is inputted from the outside in the display device of the example. The signal processing circuit 22 is also provided with an RGB/YUV conversion unit 29 in which an RGB signal is inputted from the outside; the RGB signal is converted to a YUV signal;, the Y signal of the converted YUV signal is outputted to the Y signal level correction unit 24, the histogram detection unit 25, and the UV signal level correction unit 27; and the U signal and V signal are outputted to the UV signal level correction unit 27. Other aspects of the structure, operation, and effect of the example are the same as in the aforementioned first example.

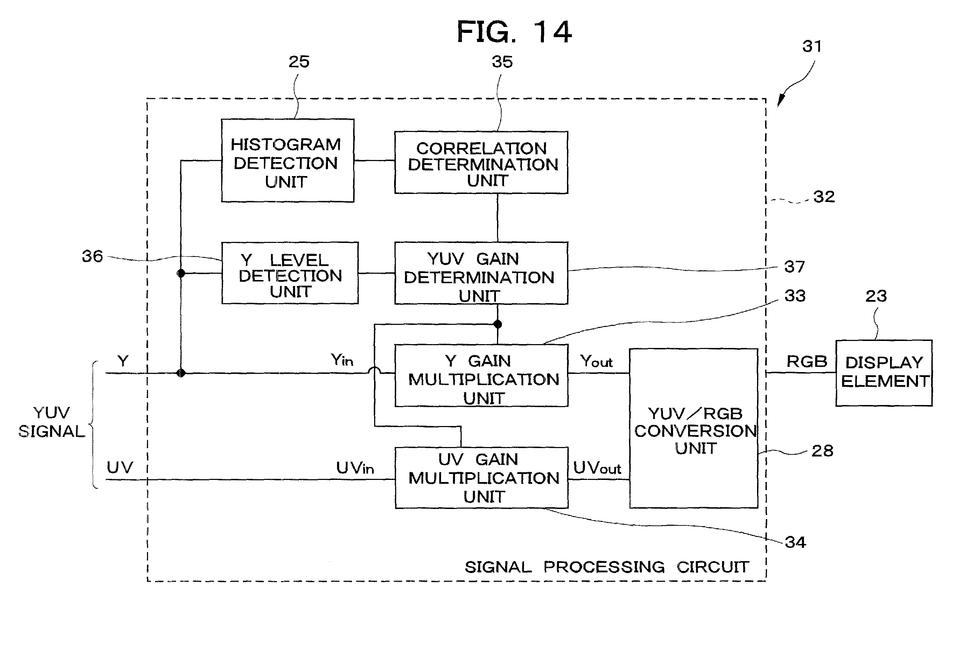

A third example of the present invention will next be described. FIG. 14 is a block diagram showing the display device of the example. The same reference symbols are used to indicate structural elements of the example that are the same as those of the first and second examples, and these structural elements are not described in detail. As shown in FIG. 14, a color digital image signal that includes a luminance component and a color difference component, i.e., a YUV signal, is inputted to the display device 31 of the example, and an image is displayed on the basis of the image signal. The display device 31 is provided with a signal processing circuit 32 and a display element 23. The signal processing circuit 32 performs nonlinear signal processing of the inputted image signal in order to improve the contrast of the image, and outputs the signal as an RGB signal to the display element 23.

The signal processing circuit 32 is provided with a Y gain multiplication unit 33 for receiving the Y signal of the YUV signal inputted from the outside, and multiplying the level of the Y signal by a prescribed gain to correct the Y signal level. The signal processing circuit 32 is also provided with a UV gain multiplication unit 34 for receiving the U signal and V signal of the YUV signal inputted from the outside, and multiplying the levels of the U signal and V signal by a prescribed gain to correct the U signal level and V signal level. A luminance/color difference gain multiplication unit is formed by the Y gain multiplication unit 33 and the UV gain multiplication unit 34.

The signal processing circuit 32 is provided with a histogram detection unit 25 for receiving the Y signal of the inputted YUV signal, and detecting a histogram of a single frame of the Y signal. The signal processing circuit 32 is also provided with a correlation determination unit 35 for determining the correlation between the level and gain of the inputted Y signal on the basis of the histogram. The correlation determination unit 35 is a CPU, for example.

The signal processing circuit 32 is furthermore provided with a Y level detection, unit 36 for receiving the Y signal of the inputted YUV signal, and detecting the Y signal level of each pixel from the Y signal. The signal processing circuit 32 is also provided with a YUV gain determination unit 37 in which a correlation is provided from the correlation determination unit 35; the Y signal level is inputted from the Y level detection unit 36; and the gain by which the Y signal, U signal, and V signal are multiplied is determined by applying the Y signal level to the correlation. The gain is provided to the Y gain multiplication unit 33 and the UV gain multiplication unit 34 from the YUV gain determination unit 37. A gain determination unit is formed by the histogram detection unit 25, the correlation determination unit 35, the Y level detection unit 36, and the YUV gain determination unit 37.

The signal processing circuit 32 is furthermore provided with a YUV/RGB conversion unit 28 in which the corrected Y signal is inputted from the Y gain multiplication unit 33; the corrected U signal and V signal are inputted from the UV gain multiplication unit 34; the YUV signal composed of the Y signal, U signal, and V signal is converted into an RGB signal; and the signal is outputted to the display element 23.

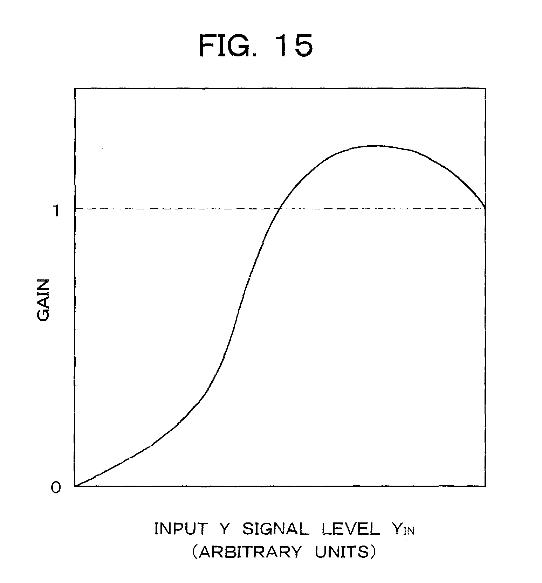

The operation of the display device of the example thus configured will next be described. Specifically, the display method of the example will be described. FIG. 15 is a graph showing the correlation between the gain and the level of the inputted Y signal, wherein the horizontal axis indicates the level of the inputted Y signal, and the vertical axis indicates the gain. As shown in FIG. 14, when a YUV signal is inputted to the signal processing circuit 32 of the display device 31 from the outside, the Y signal of the YUV signal is inputted to each of the histogram detection unit 25, the Y level detection unit 36, and the Y gain multiplication unit 33, and the U signal and V signal are inputted only to the UV gain multiplication unit 34.

The histogram detection unit 25 then detects a histogram of a single frame of the Y signal, and outputs the detected result to the correlation determination unit 35. With the correlation determination unit 35, a correlation between the level of the Y signal and the gain by which each signal is multiplied is determined on the basis of the histogram, and the correlation is provided to the YUV gain determination unit 37. At this time, several types of functions or tables are stored in the correlation determination unit 35, and the correlation may be determined by selecting the optimum function or table according to the histogram, or the correlation may be determined by performing a prescribed computation based on the histogram and generating the optimum function or table.

The correlation is the type of relationship shown in FIG. 15, for example. Specifically, when the level of the inputted Y signal is higher than a reference value, the gain is higher than 1, and the Y signal is thus corrected so as to have a higher value. When the level of the inputted Y signal is lower than a reference value, the gain is less than 1, and the Y signal is thus corrected so as to have a lower value. The contrast of pixels having an intermediate tonal level can thereby be emphasized, and the contrast of the image as a whole can be improved.

The Y level detection unit 36 detects the Y signal level of each pixel from the Y signal of the inputted YUV signal, and outputs the detected result to the YUV gain determination unit 37. The YUV gain determination unit 37 thereby applies the Y signal level to the correlation provided from the correlation determination unit 35, and determines the gain. This gain is provided to the Y gain multiplication unit 33 and the UV gain multiplication unit 34.

The Y gain multiplication unit 33 then multiplies the inputted Y signal by the gain that was provided from the YUV gain determination unit 37, and corrects the Y signal level. The UV gain multiplication unit 34 also multiplies the inputted U signal and V signal by the gain that was provided from the YUV gain determination unit 37, and corrects the U signal level and V signal level. The Y gain multiplication unit 33 and the UV gain multiplication unit 34 output the corrected Y signal, U signal, and V signal to the YUV/RGB conversion unit 28. The YUV/RGB conversion unit 28 converts the signal to an RGB signal and outputs the RGB signal to the display element 23. The display element 23 displays an image on the basis of the RGB signal.

The effect of the example will next be described. In the example, the Y signal, U signal, and V signal of the inputted YUV signal are multiplied by the same gain. The color balance of the image signal is therefore not degraded by correction. This effect will be described in quantitative terms hereinafter using equations.

(1) Conversion Equation

The equation for converting between an RGB signal and a YUV signal will first be defined. When an RGB signal is converted to a YUV signal, the conversion equations are Eqs. 3 through 6 below, wherein R, G, and B are the levels of the R component, the G component, and the B component, respectively, of the RGB signal; Y is the level of the luminance signal of the YUV signal; Cb and Cr are the levels of the color difference signals; and a, b, c, d, and e are coefficients. Each of the coefficients a, b, c, d, and e has a fixed value and is indicated as a letter for convenience in the description.

[Eq. 3]

$$Y = a \times R + b \times G + c \times B$$

[Eq. 4]

$$a + b + c = 1$$

[Eq. 5]

$$Cb = d \times (B - Y)$$

[Eq. 6]

$$Cr = e \times (R - Y)$$

When a YUV signal is converted to an RGB signal, the conversion equations are Eqs. 7 through 9 below. Eqs. 7 through 9 below are derived by taking the inverse of Eqs. 3 through 6.

[Eq. 7]

$$R = \frac{Cr}{e} + Y$$

[Eq. 8]

$$G = Y - \frac{c \times d}{b} \times Cb - \frac{a \times e}{b} \times Cr$$

[Eq. 9]

$$B = \frac{Cb}{d} + Y$$

(2) Correction of luminance level alone

When the Y signal of the YUV signal alone is corrected using the abovementioned equations according to the aforementioned conventional technique, the type of change in the overall color balance is calculated. When a type of contrast correction is performed for a YUV signal whereby the value of Y is multiplied by m, and the values of Cb and Cr are not changed, Eqs. 10 through 12 below are established, wherein Y', Cb', and Cr' are the levels of the signals after correction.

[Eq. 10]

$$Y' = m \times Y$$

[Eq. 11]

$$Cb' = Cb$$

[Eq. 12]

$$Cr' = Cr$$

When Eqs. 10 through 12 above are substituted into Eqs. 7 through 9, and Eqs. 3 through 6 are also substituted, the RGB components of the corrected signal can be calculated as shown in Eqs. 13 through 15 below. In the equations, R', G', and B' are the corrected levels of the R component, the G component, and the B component, respectively.

[Eq. 13]

$$R' = \frac{Cr'}{e} + Y' = \frac{Cr}{e} + m \times Y = \frac{e \times (R-Y)}{e} + m \times Y = (R-Y) + m \times Y = R + (m-1) \times Y$$
$$= \{1 + a \times (m-1)\} \times R + b \times (m-1) \times G + c \times (m-1) \times B$$

[Eq. 14]

$$G' = Y' - \frac{c \times d}{b} \times Cb' - \frac{a \times e}{b} \times Cr' = m \times Y - \frac{c \times d}{b} \times Cb - \frac{a \times e}{b} \times Cr$$
$$= m \times Y - \frac{c \times d}{b} \times (B-Y) \times d - \frac{a \times e}{b} \times (R-Y) \times e = \left(m + \frac{a}{b} + \frac{c}{b}\right) \times Y - \frac{a}{b} \times R - \frac{c}{b} \times B$$
$$= \frac{a \times (a + m \times b + c - 1)}{b} \times R + (a + m \times b + c) \times G + \frac{c \times (a + m \times b + c - 1)}{b} \times B$$
$$= \frac{a \times (m \times b - b)}{b} \times R + (a + m \times b + c) \times G + \frac{c \times (m \times b - b)}{b} \times B$$
$$= a \times (m-1) \times R + (a + m \times b + c) \times G + c \times (m-1) \times B$$

[Eq. 15]

$$B' = \frac{Cb'}{d} + Y' = \frac{Cb}{d} + m \times Y = \frac{d \times (B-Y)}{d} + m \times Y = (B-Y) + m \times Y = B + (m-1) \times Y$$
$$= a \times (m-1) \times R + b \times (m-1) \times G + \{1 + c \times (m-1)\} \times B$$

As shown in Eqs. 13 through 15, each of the component levels R', G', and B' of the corrected signal is dependent on all of the component levels R, G, and B of the signal before correction. The coefficients associated with the levels R, G, and B also differ from each other in the three equations for calculating the levels R', G', and B'. Accordingly, each of the component levels R', G', and B' of the image signal after the Y signal is corrected is affected by the levels R, G, and B of the other color components before correction, and the color balance of the corrected signal differs from the color balance of the signal before correction.

(3) Correction of luminance level and color difference levels by the same gain

When each of the Y signal, U signal, and V signal of a YUV signal is corrected by the same gain using the abovementioned conversion formulas in the example, the type of change in the overall color balance is calculated. Eqs. 16 through 18 below can be established when the contrast of the YUV signal is corrected and the values of Y, Cb, and Cr are multiplied by m. In the equations, Y', Cb', and Cr' are the levels of the signals after correction.

[Eq. 16]

$$Y' = m \times Y$$

[Eq. 17]

$$Cb' = m \times Cb$$

[Eq. 18]

$$Cr' = m \times Cr$$

When Eqs. 16 through 18 above are substituted into Eqs. 7 through 9, and Eqs. 3 through 6 are also substituted, the RGB components of the corrected signal can be calculated as shown in Eqs. 19 through 21 below.

[Eq. 19]

$$R' = \frac{Cr'}{e} + Y' = \frac{m \times Cr}{e} + m \times Y = \frac{m \times (R-Y) \times e}{e} + m \times Y = m \times (R-Y) + m \times Y = m \times R$$

[Eq. 20]

$$G' = Y' - \frac{c \times d}{b} \times Cb' - \frac{a \times e}{b} \times Cr' = m \times Y - \frac{c \times d}{b} \times m \times Cb - \frac{a \times e}{b} \times m \times Cr$$

$$= m \times Y - \frac{c \times d}{b} \times m \times (B-Y) \times d - \frac{a \times e}{b} \times m \times (R-Y) \times e$$

$$= \frac{m}{b} \times (Y - a \times R - c \times B) = \frac{m}{b} \times (a \times R + b \times G + c \times B - a \times R - c \times B) = \frac{m}{b} \times b \times G = m \times G$$

[Eq. 21]

$$B' = \frac{Cb'}{d} + Y' = \frac{m \times Cb}{d} + m \times Y = \frac{m \times d \times (B-Y)}{d} + m \times Y = m \times (B-Y) + m \times Y = m \times B$$

As shown in Eqs. 19 through 21 above, each of the component levels R', G', and B' of the corrected signal is dependent only on the component level R, G, or B of the same color before correction, and the rate of change is also the same (m times). Accordingly, the color balance of the corrected signal is the same as the color balance of the signal before correction.

Correction is thus accompanied by a deterioration in color balance in the conventional method in which only the luminance component (Y signal) is corrected. However, the color balance is not degraded by the correction according to the method of the example, in which the luminance component (Y signal) and the color difference components (U signal and V signal) are both corrected by the same gain.

A more specific numerical example will be cited to describe this result. Table 1 shows a computation example in a case in which the component levels are corrected by -7% according to the correction method of the example and the conventional correction method.

[Table 1]

| Method | | Before Correction | | | | After Correction | | | |
|---|---|---|---|---|---|---|---|---|---|
| | | RGB | | YUV | | YUV | | RGB | |
| | | Level | Relative Value | | Level | Level | | Level | Relative Value |
| Example | R | 170 | 1.000 | Y | 115 | 108 | R | 156 | 1.000 |
| | G | 108 | 0.646 | U | -54 | -50 | G | 101 | 0.646 |
| | B | 20 | 0.119 | V | 37 | 34 | B | 19 | 0.119 |
| Conventional Example | R | Same as above | Same as above | Y | Same as above | 108 | R | 159 | 1.000 |
| | G | | | U | | -54 | G | 100 | 0.629 |
| | B | | | V | | 37 | B | 12 | 0.075 |

As shown in Table 1, an RGB signal that indicates a skin color is used as the image signal before correction. This signal is composed of R = 170, G = 108 and B = 20. The numerical value of each component level is an integer from 0 to 255, with 255 indicating the brightest state, and 0 indicating the darkest state. When the R component level is indicated as a relative value of 1, this color balance is R:G:B = 1.000:0.646:0.119. When this RGB signal is converted to a YUV signal, Y = 115, U = -54, and V = 37. The values of Y are in the range of 0 to 255, and the values of U and V are in the range of -127 to +127. The abovementioned conditions are the same in the example and the conventional example.

In the example, since the signals of the YUV signal are multiplied by a gain of -7%, the corrected YUV signal is Y = 108, U = -50, and V = 34. However, in the conventional example, since only the Y signal is multiplied by a gain of -7%, the Y signal level is Y = 108, the same as in the example, but the U signal level and V signal level are not corrected, and therefore remain as U = -54 and V = 37. When this converted YUV signal is converted back to an RGB signal and is indicated as a relative value, with the R component level being 1, the result in the example remains unchanged at R:G:B = 1.000:0.646:0.119. However, in the conventional example, the result is R:G:B = 1.000:0.629:0.075, is different from the value before correction. It is thus apparent in the numerical example as well that the color balance is not degraded by correction in the example, but is degraded in the conventional example.

The correction method of the example will next be compared to the method described in Japanese Laid-open Patent Application No. 2000-115799, in which the color difference component is corrected on the basis of the amount of change ($\Delta Y = Y_{out} - Y_{in}$) in the luminance signal. Table 2 shows a computation example in which the color difference signal level is corrected by +10% in a case in which the luminance signal level is corrected by +10 IRE according to the correction method of the example and the correction method described in Japanese Laid-open Patent Application No. 2000-115799.

[Table 2]

| Method | | Before Correction | After Correction | | | | |
|---|---|---|---|---|---|---|---|
| | | Luminance Signal | Luminance Signal | | | | Rate of Change In Color Difference Signal |
| | | $Y_{in}$ (IRE) | $Y_{out}$ (IRE) | Amount of Correction $\Delta Y$ | Rate of Change $Y_{out}/Y_{in}$ | | |
| Example | | 80 | 90 | 10 | 1.125 | | 1.125 |
| | | 50 | 60 | 10 | 1.200 | | 1.200 |
| Conventional Example | | 80 | 90 | 10 | 1.125 | | 1.1 |
| | | 50 | 60 | 10 | 1.200 | | 1.1 |

As shown in Table 2, cases are described in which the luminance signal level before correction is 80 IRE and 50 IRE. The term "IRE" stands for "Institute of Radio Engineers," and is a unit indicating the amplitude of a television signal. A value of 100 IRE indicates pure white, and a value of 0 IRE indicates pure black. As shown in Table 2, when a luminance signal level of 80 IRE and a luminance signal level of 50 IRE are increased by +10 IRE to give 90 IRE and 60 IRE, respectively, the amount of change is the same, being 10 IRE, for both levels, but the rates of change are different, being 1.125 and 1.200, respectively. In the example, the color difference signals are corrected using the same rate of change as the rate of change of the luminance signal level. Therefore, the color levels increase by an amount commensurate with the amount of increase in the luminance, and there is no change in the overall color saturation and hue. However, according to the conventional method described in Japanese Laid-open Patent Application No. 2000-115799, the color difference signal levels are changed only by a factor of 1.1 even when the luminance signal level is change by a factor of 1.125 and 1.200, and the color appears relatively faint. This tendency is more pronounced when the luminance signal level before correction is 50 IRE. According to the example as described above, a change in color balance that accompanies correction can be prevented.

In comparison to the first example, there is no need to perform division during correction in the example. Therefore, the scale of the circuit can be reduced, design of the circuit can be simplified, and the surface area and cost of the circuit can be reduced when the signal processing circuit is composed of hardware.

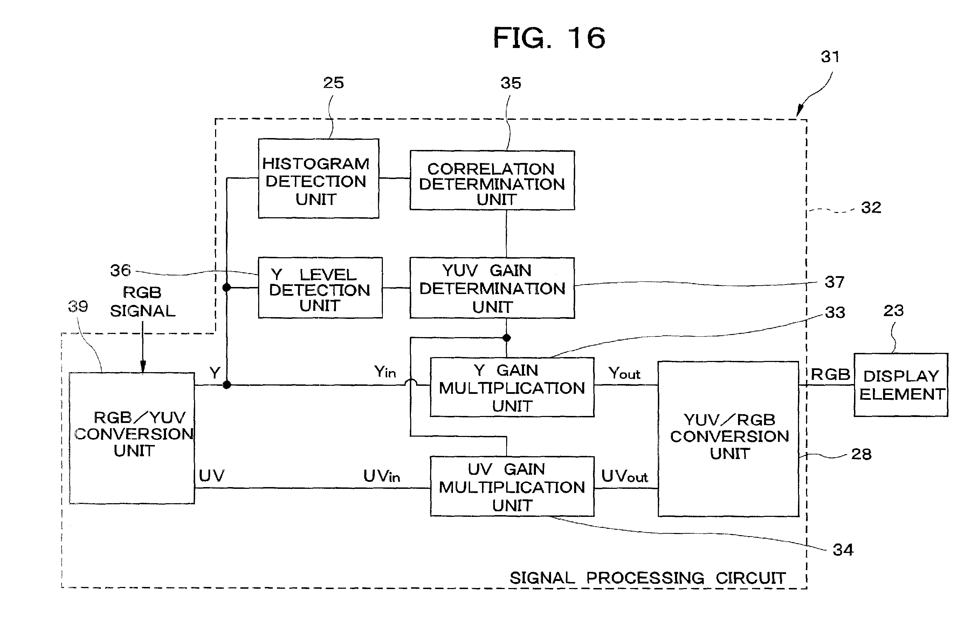

A fourth example of the present invention will next be described. FIG. 16 is a block diagram showing the display device of the example. As shown in FIG. 16, in the display device of the example, an RGB signal is inputted instead of a YUV signal as the image signal inputted from the outside. The signal processing circuit 32 is also provided with an RGB/YUV conversion unit 39 in which an RGB signal is inputted from the outside; the RGB signal is converted to a YUV signal; the Y signal of the converted YUV signal is outputted to the histogram detection unit 25, the Y level detection unit 36, and the Y gain multiplication unit 33; and the U signal and V signal are outputted to the UV gain multiplication unit 34. Other aspects of the structure, operation, and effect of the example are the same as in the aforementioned third example.

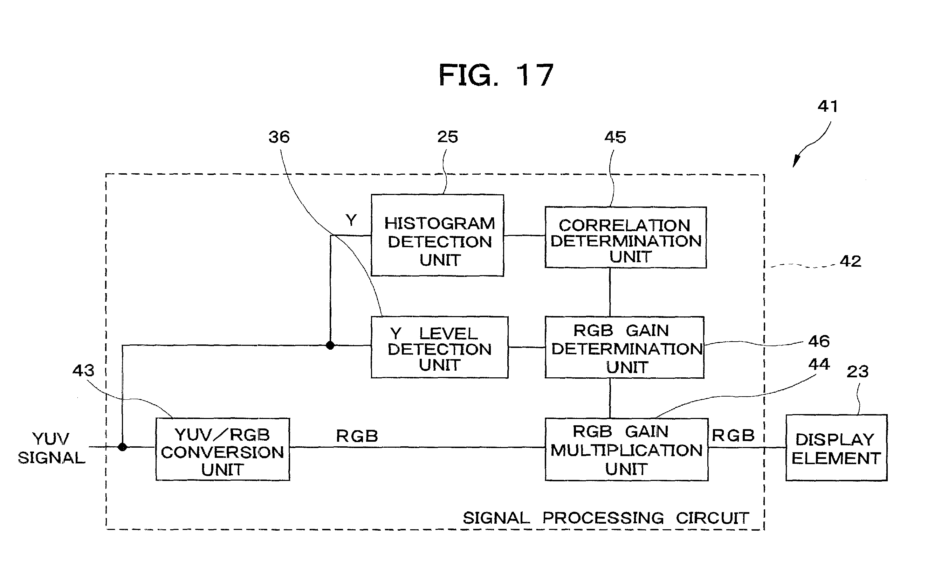

A fifth example of the present invention will next be described. FIG. 17 is a block diagram showing the display device of the example. The same reference symbols are used to indicate structural elements of the example that are the same as those of the first through fourth examples, and these structural elements are not described, in detail. As shown in FIG. 17, a color digital image signal that includes a luminance component and a color difference component, i.e., a YUV signal, is inputted to the display device 41 of the example, and an image is displayed on the basis of the image signal. The display device 41 is provided with a signal processing circuit 42 and a display element 23. The signal processing circuit 42 performs nonlinear signal processing of the inputted image signal in order to improve the contrast of the image and outputs the signal as an RGB signal to the display element 23.

The signal processing circuit 42 is provided with a YUV/RGB conversion unit 43 for converting an externally inputted YUV signal into an RGB signal, and an RGB gain multiplication unit 44 whereby each component level of the RGB signal outputted from the YUV/RGB conversion unit 43 is multiplied by the same gain to correct the RGB signal. The RGB signal that is corrected by the RGB gain multiplication unit 44 is outputted to the display element 23.

The signal processing circuit 42 is provided with a histogram detection unit 25 for receiving the Y signal of the inputted YUV signal, and detecting a histogram of a single frame of the Y signal. The signal processing circuit 42 is also provided with a correlation determination unit 45 for determining the correlation between the level and gain of the inputted Y signal on the basis of the histogram. The correlation determination unit 45 is a CPU, for example.

The signal processing circuit 42 is furthermore provided with a Y level detection unit 36 for receiving the Y signal of the inputted YUV signal, and detecting the Y signal level of each pixel from the Y signal. The signal processing circuit 42 is also provided with an RGB gain determination unit 46 in which the correlation is provided from the correlation determination unit 45; the Y signal level is inputted from the Y level detection unit 36;, and the gain by which the R component, the G component, and the B component of the RGB signal are multiplied is determined by applying the Y signal level to the correlation for each pixel. The gain is provided to the RGB gain multiplication unit 44 from the RGB gain determination unit 46.

The operation of the display device of the example thus configured will next be described. Specifically, the display method of the example will be described. As shown in FIG. 17, when a YUV signal is inputted to the signal processing circuit 42 of the display device 41 from the outside, the Y signal of the YUV signal is inputted to each of the histogram detection unit 25 and the Y level detection unit 36, and the YUV signal as a whole is inputted to the YUV/RGB conversion unit 43.

The histogram detection unit 25 then detects a histogram of a single frame of the Y signal, and outputs the detected result to the correlation determination unit 45. With the correlation determination unit 45, a correlation between the level of the Y signal and the gain by which each component of the RGB signal is multiplied is determined on the basis of the histogram, and the correlation is provided to the RGB gain determination unit 46. At this time, several types of functions or tables are stored in the correlation determination unit 45, and the correlation may be determined by selecting the optimum function or table according to the histogram, or the correlation may be determined by performing a prescribed computation based on the histogram and generating the optimum function or table. The correlation is the type of relationship shown in FIG. 15, for example.

The Y level detection unit 36 detects the Y signal level of each pixel from the Y signal of the inputted YUV signal, and outputs the detected result to the RGB gain determination unit 46. The RGB gain determination unit 46 thereby applies the Y signal level to the correlation provided from the correlation determination unit 45, and determines the gain of each pixel. This gain is provided to the RGB gain multiplication unit 44.

The RGB gain multiplication unit 44 then multiplies the R component, the G component, and the B component of the inputted RGB signal by the gain that was provided from the RGB gain determination unit 46. Specifically, the RGB signal is corrected by multiplying the R component, the G component, and the B component by the same gain. This corrected RGB signal is outputted to the display element 23. The display element 23 displays an image on the basis of the RGB signal.

The effect of the example will next be described. In the example, correction is performed by multiplying the R component, the G component, and the B component of the inputted RGB signal by the same gain, and the color balance of the image signal is therefore not degraded by correction. Since there is also no need to perform division during correction, the scale of the circuit can be reduced, design of the circuit is simplified, and the surface area and cost of the circuit can be reduced.

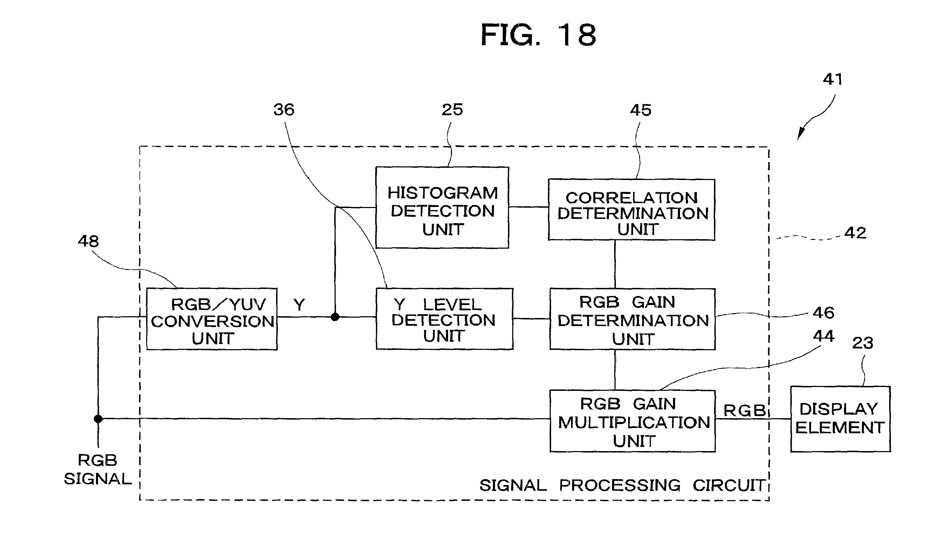

A sixth example of the present invention will next be described. FIG. 18 is a block diagram showing the display device of the example. As shown in FIG. 18, in the display device of the example, an RGB signal is inputted instead of a YUV signal as the image signal inputted from the outside. A YUV/RGB conversion unit 43 (see FIG. 17) is not provided to the signal processing circuit 42, and the externally inputted RGB signal is inputted to the RGB gain multiplication unit 44 without being converted. The signal processing circuit 42 is also provided with a Y signal generation unit 48 for generating a Y signal from the externally inputted RGB signal, and outputting the Y signal to each of the histogram detection unit 25 and the Y level detection unit 36. Other aspects of the structure and operation of the example are the same as in the aforementioned fifth example.

The effect of the example will next be described. In the aforementioned fourth example (see FIG. 16), an image signal that is inputted from the outside in RGB format is temporarily converted to a YUV signal and corrected, and then the signal is converted back to an RGB signal and outputted to the display element. An RGB/YUV conversion unit 39 and a YUV/RGB conversion unit 28 must therefore be provided before and after the gain multiplication unit. However, in the example, the image signal inputted from the outside in RGB format is corrected while still in RGB format, and is outputted in RGB format to the display element. Therefore, there is no need to provide an RGB/YUV conversion unit and a YUV/RGB conversion unit, and the circuit structure is simplified. As a result, the surface area and cost of the circuit can be reduced, and the signal processing speed can be enhanced in comparison to the aforementioned fourth example. As shown in FIG. 18, a Y signal generation unit 48 is provided to the display device 41 of the example, but this unit generates only a Y signal from the RGB signal, and the structure thereof is simpler than that of the RGB/YUV conversion unit 39 for generating a Y signal, a U signal, and a V signal from the RGB signal. Other effects in the example are the same as those of the aforementioned fifth example.

In the previously described examples, the signal processing circuit is composed of a logic circuit or other hardware, but the signal processing circuit may also be implemented by software using a computer, i.e., an LSI (Large Scale Integrated circuit) or the like.

Examples of signal processing in which correction is performed to improve contrast were described in the examples, but the present invention is not limited by these examples. For example, the present invention may be applied to reverse $?$ conversion, and corrections for reverse $?$ conversion and contrast improvement may be performed simultaneously.

Furthermore, the display element is not limited to a PDP, and may be an LCD (Liquid Crystal Display) or the like, for example.

In the example, the signal processing circuit multiplies the components (Y signal, U signal, and V signal) of the image signal by the same gain, and the color saturation, hue, and other color balance characteristics of the image signal are therefore not degraded by signal processing. A display having good color reproduction properties can therefore be obtained.

In summary an embodiment of the invention can be described as follows:

When a YUV signal is inputted to a signal processing circuit (32) from the outside, a histogram detection unit detects a histogram of a single frame of the Y signal, a correlation determination unit (35) determines a correlation between a gain and a level of an inputted Y signal on the basis of the histogram, and a YUV gain determination unit (37) determines the gain. A Y gain multiplication unit (33) and a UV gain multiplication unit (34) multiply each of the inputted Y signal, U signal, and V signal by the same gain to correct the YUV signal. A YUV/RGB conversion unit (28) converts the signal into an RGB signal, and outputs the result to a display element (23). In the display device, there is no change in color balance even when contrast correction and other nonlinear signal processing are performed.

**Claims**

1.  A display device comprising a signal processing circuit (2,5,11,22,32,42) for performing nonlinear signal processing of an inputted color image signal, **characterized in that** the signal processing circuit multiplies each component of said image signal by the same gain.

2. The display device according to claim 1,
**characterized in that**
said image signal is an RGB-type signal; and
said signal processing circuit (5) has an RGB gain multiplication unit (6) for multiplying each of an R component, a G component, and a B component of said signal by said same gain.

3. The display device according to claim 1,
**characterized in that**
said image signal includes a luminance component and a color difference component; and
said signal processing circuit (5) has an RGB converter (8) for converting said image signal into an RGB-type signal, and further has an RGB gain multiplication unit (6) for multiplying each of an R component, a G component, and a B component of said RGB-type signal by said same gain.

4. The display device according to claim 1,
**characterized in that**
said image signal includes a luminance component and a color difference component; and
said signal processing circuit (11) has a luminance/color difference gain multiplication unit (12) for multiplying each of said luminance component and said color difference component by said same gain.

5. The display device according to claim 1,
**characterized in that**
said image signal is an RGB-type signal; and
said signal processing circuit (11) has a luminance/color difference converter (15) for converting said RGB-type image signal into a signal that includes a luminance component and a color difference component, and further has a luminance/color difference gain multiplication unit (12) for multiplying each of said luminance component and said color difference component by said same gain.

6. The display device according to claim 4 or 5, comprising a display element (3) for displaying an image on the basis of an RGB-type signal, **characterized in that**
said signal processing circuit (11) has an RGB converter (13) for converting a signal that includes a luminance component multiplied by said gain and a color difference component multiplied by said gain into an RGB-type signal, and outputting the RGB-type signal to said display element.

7. The display device according to any one of claims 4 to 6, **characterized in that** said luminance/color difference gain multiplication unit (12) comprises:

a histogram detection unit (25) for detecting a histogram of a luminance component of a single frame of said image signal;
a correlation determination unit (26) for determining a correlation between a level of an inputted luminance component of each pixel and a level of an outputted luminance component on the basis of the histogram;
a luminance component correction unit (24) for correcting a luminance component level of each pixel on the basis of said correlation; and
a color difference component correction unit (27) for multiplying said color difference component by a ratio of said luminance component level before correction, and said luminance component level after correction, and correcting said color difference component.

8. The display device according to any one of claims 1 to 6, **characterized in that** said signal processing circuit (32,42) comprises a gain determination unit (37,46) for determining said gain on the basis of a luminance component of said image signal.

9. The display device according to claim 8, **characterized in that** said gain determination unit comprises:

a histogram detection unit for detecting a histogram of a luminance component of a single frame of said image signal;
a correlation determination unit for determining a correlation between a luminance component and a gain on the basis of the histogram;
a luminance component level detection unit for detecting a level of a luminance component of each pixel from said luminance component; and
a gain calculator for determining said gain on the basis of said correlation and said luminance component level.

**10.** A signal processing circuit for performing nonlinear signal processing of an inputted color image signal, **characterized in that** said signal processing circuit multiplies each component of said image signal by the same gain.

**11.** A program for causing a computer to execute a signal processing procedure for performing nonlinear signal processing of an inputted color image signal, **characterized in that**
said signal processing procedure comprises multiplying each component of said image signal by the same gain.

**12.** The program according to claim 11, **characterized in that**
said image signal is an RGB-type signal; and
said signal processing procedure has an RGB gain multiplication procedure for multiplying each of an R component, a G component, and a B component of said signal by said same gain.

**13.** The program according to claim 11, **characterized in that**
said image signal includes a luminance component and a color difference component; and
said signal processing procedure has an RGB conversion procedure for converting said image signal into an RGB-type signal, and an RGB gain multiplication procedure for multiplying each of an R component, a G component, and a B component of the RGB-type signal by said same gain.

**14.** The program according to claim 11, **characterized in that**
said image signal includes a luminance component and a color difference component; and
said signal processing procedure has a luminance/color difference gain multiplication procedure for multiplying each of said luminance component and said color difference component by said same gain.

**15.** The program according to claim 11, **characterized in that**
said image signal is an RGB-type signal; and
said signal processing procedure has a luminance/color difference conversion procedure for converting said RGB-type image signal into a signal that includes a luminance component and a color difference component, and further has a luminance/color difference gain multiplication procedure for multiplying each of said luminance component and said color difference component by said same gain.

**16.** The program according to any one of claims 11 to 15, **characterized in that** said signal processing procedure comprises a gain determination procedure for determining said gain on the basis of a luminance component of said image signal.

**17.** The program according to claim 16, **characterized in that** said gain determination procedure comprises:

a histogram detection procedure for detecting a histogram of a luminance component of a single frame of said image signal;
a correlation determination procedure for determining a correlation between a luminance component and a gain on the basis of the histogram;
a luminance component level detection procedure for detecting a luminance component level of each pixel from said luminance component; and
a gain calculation procedure for determining said gain on the basis of said correlation and said luminance component level.

**18.** A display method comprising a signal processing step for performing nonlinear signal processing of an inputted color image signal, **characterized in that** the signal processing step comprises multiplying each component of said image signal by the same gain.

# FIG. 1 (PRIOR ART)

SIGNAL PROCESSING CIRCUIT

YUV SIGNAL

Y

HISTOGRAM DETECTION UNIT

CORRECTION METHOD DETERMINATION UNIT

YUV／RGB CONVERSION UNIT

RGBin

RGB CORRECTION UNIT

RGBout

DISPLAY ELEMENT

106

107

102

101

103

104

105

EP 1 786 214 A2

# FIG. 2 (PRIOR ART)

SIGNAL PROCESSING CIRCUIT

RGB SIGNAL

114 — RGB/YUV CONVERSION UNIT — Y

106 — HISTOGRAM DETECTION UNIT

107 — CORRECTION METHOD DETERMINATION UNIT

112

111

105 — RGBin — RGB CORRECTION UNIT — RGBout

103 — DISPLAY ELEMENT

EP 1 786 214 A2

19

# FIG. 3 (PRIOR ART)

EP 1 786 214 A2

# FIG. 4 (PRIOR ART)

SIGNAL PROCESSING CIRCUIT

RGB SIGNAL → RGB/YUV CONVERSION UNIT (133)

HISTOGRAM DETECTION UNIT (106)

CORRECTION METHOD DETERMINATION UNIT (107)

Y SIGNAL CORRECTION UNIT (124)

YUV/RGB CONVERSION UNIT (125)

DISPLAY ELEMENT (103)

Y, $Y_{in}$, $Y_{out}$, RGB, U、V

131, 132

EP 1 786 214 A2

# FIG. 5(PRIOR ART)

OUTPUT SIGNAL LEVEL
(ARBITRARY UNITS)

B      G      R

INPUT SIGNAL LEVEL
(ARBITRARY UNITS)

# FIG. 6

1

2              3

IMAGE SIGNAL —— | SIGNAL PROCESSING CIRCUIT | —— | DISPLAY ELEMENT |

# FIG. 7

RGB
SIGNAL

```
┌──────────────────────────────────────┐
│                    6        5         │
│              ┌──────────────┐         │
│              │  RGB  GAIN   │         │
│──────────────│ MULTIPLICATION│────────│──────
│              │    UNIT      │         │
│              └──────────────┘         │
│                                       │
│      SIGNAL  PROCESSING  CIRCUIT      │
└──────────────────────────────────────┘
```

4
3

DISPLAY
ELEMENT

# FIG. 8

YUV
SIGNAL

```
┌───────────────────────────────────────────────┐
│        8              6        5                │
│   ┌──────────┐   ┌──────────────┐              │
│   │   RGB    │   │  RGB  GAIN   │              │
│───│CONVERSION│───│ MULTIPLICATION│─────────────│────
│   │   UNIT   │   │    UNIT      │              │
│   └──────────┘   └──────────────┘              │
│                                                │
│       SIGNAL  PROCESSING  CIRCUIT              │
└───────────────────────────────────────────────┘
```

7
3

DISPLAY
ELEMENT

# FIG. 9

RGB SIGNAL → SIGNAL PROCESSING CIRCUIT (12: LUMINANCE／COLOR DIFFERENCE GAIN MULTIPLICATION UNIT → 13 → 11: RGB CONVERSION UNIT) → 3: DISPLAY ELEMENT

10

EP 1 786 214 A2

# FIG. 10

EP 1 786 214 A2

```
                    15                    12              13    11              14

        ┌──────────────────────────────────────────────────────────────┐      3
 YUV    │ ┌──────────────┐  ┌──────────────┐  ┌──────────┐ │      ┌──────────┐
SIGNAL  │ │LUMINANCE/COLOR│  │LUMINANCE/COLOR│  │   RGB    │ │      │ DISPLAY  │
────────┼─│  DIFFERENCE   ├──│  DIFFERENCE   ├──│CONVERSION├─┼──────│ ELEMENT  │
        │ │  CONVERSION   │  │GAIN MULTIPLICATION│ │   UNIT   │ │      └──────────┘
        │ │    UNIT       │  │    UNIT        │  └──────────┘ │
        │ └──────────────┘  └──────────────┘               │
        │                                                   │
        │                         SIGNAL PROCESSING CIRCUIT │
        └──────────────────────────────────────────────────────────────┘
```

# FIG. 11

HISTOGRAM DETECTION UNIT — 25

CORRELATION DETERMINATION UNIT — 26

Y SIGNAL LEVEL CORRECTION UNIT — 24

UV SIGNAL LEVEL CORRECTION UNIT — 27

YUV／RGB CONVERSION UNIT — 28

DISPLAY ELEMENT — 23

YUV SIGNAL

$Y_{in}$

$UV_{in}$

$Y_{out}$

$UV_{out}$

RGB

21

22

$U_{out} = U_{in} \times (Y_{out}／Y_{in})$

$V_{out} = V_{in} \times (Y_{out}／Y_{in})$

SIGNAL PROCESSING CIRCUIT

# FIG. 12

# FIG. 13

RGB SIGNAL

RGB/YUV CONVERSION UNIT

HISTOGRAM DETECTION UNIT

CORRELATION DETERMINATION UNIT

Y SIGNAL LEVEL CORRECTION UNIT

UV SIGNAL LEVEL CORRECTION UNIT

YUV/RGB CONVERSION UNIT

DISPLAY ELEMENT

$Y_{in}$

$UV_{in}$

$Y_{out}$

$UV_{out}$

RGB

$U_{out} = U_{in} \times (Y_{out}/Y_{in})$
$V_{out} = V_{in} \times (Y_{out}/Y_{in})$

SIGNAL PROCESSING CIRCUIT

EP 1 786 214 A2

# FIG. 14

## FIG. 15

GAIN

1

0

INPUT Y SIGNAL LEVEL $Y_{IN}$
(ARBITRARY UNITS)

# FIG. 16

SIGNAL PROCESSING CIRCUIT

EP 1 786 214 A2

# FIG. 17

EP 1 786 214 A2

## FIG. 18

RGB SIGNAL

RGB/YUV CONVERSION UNIT — 48

Y — 36

HISTOGRAM DETECTION UNIT — 25

CORRELATION DETERMINATION UNIT — 45

Y LEVEL DETECTION UNIT

RGB GAIN DETERMINATION UNIT — 46

RGB GAIN MULTIPLICATION UNIT — 44

RGB — DISPLAY ELEMENT — 23

SIGNAL PROCESSING CIRCUIT

41 — 42

EP 1 786 214 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000115799 A